(19) Europäisches Patentamt / European Patent Office / Office européen des brevets

(11) **EP 3 525 015 B1**

(12) **FASCICULE DE BREVET EUROPEEN**

(45) Date de publication et mention
de la délivrance du brevet:
**20.05.2020 Bulletin 2020/21**

(51) Int Cl.:
*G02B 5/00* (2006.01)   *G02B 27/58* (2006.01)
*G06K 9/00* (2006.01)   *G02B 5/18* (2006.01)

(21) Numéro de dépôt: **19155212.4**

(22) Date de dépôt: **04.02.2019**

(54) **ÉLEMENT OPTIQUE MONOBLOC A DIAPHRAGME**

OPTISCHES MONOBLOCKELEMENT MIT DIAPHRAGMA

SINGLE-PIECE OPTICAL ELEMENT WITH DIAPHRAGM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.02.2018 FR 1851010**

(43) Date de publication de la demande:
**14.08.2019 Bulletin 2019/33**

(73) Titulaire: **Idemia Identity & Security France
92400 Courbevoie (FR)**

(72) Inventeur: **TROUBOUL, Laurent
92400 COURBEVOIE (FR)**

(74) Mandataire: **Regimbeau
20, rue de Chazelles
75847 Paris Cedex 17 (FR)**

(56) Documents cités:
**US-A1- 2004 247 906    US-B1- 7 969 654**

**Description**

La présente invention appartient au domaine de l'optique, et plus précisément concerne un élément optique monobloc comprenant un diaphragme, de préférence incorporé à un capteur d'empreintes digitales.

Le domaine de la biométrie fait souvent appel à des systèmes optiques afin d'acquérir les données biométriques qui doivent être traitées. C'est en particulier le cas pour les capteurs d'empreintes digitales, qui doivent illuminer un doigt et en récupérer la lumière pour la traiter.

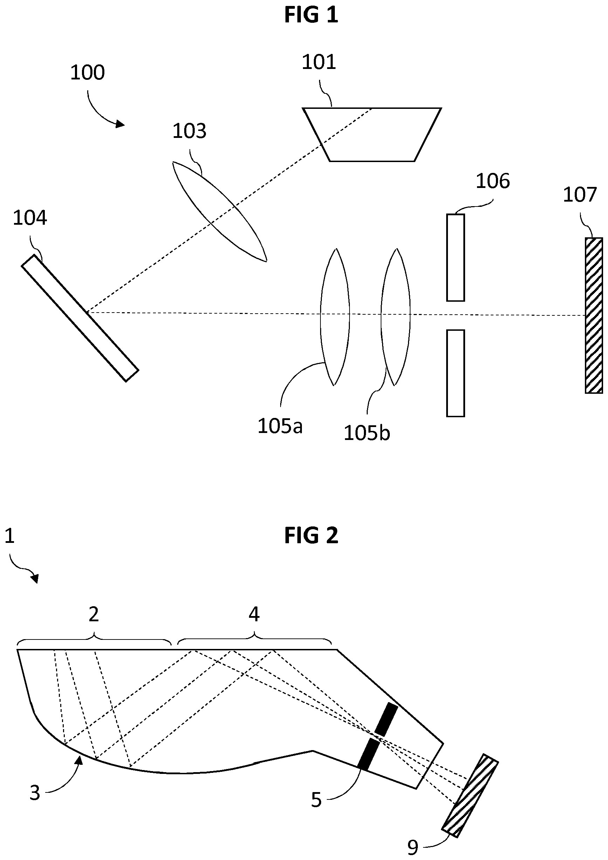

La figure 1 montre un exemple d'un système optique 100 utilisé dans un capteur d'empreintes digitales. Un tel système optique comprend plusieurs éléments distincts. Un prisme 101 est utilisé pour recevoir à sa surface le doigt dont les empreintes digitales doivent être acquises. La lumière résultant de l'interaction entre le doigt et le prisme 101 passe dans une première lentille 103, puis est réfléchie par un miroir 104. La lumière traverse deux lentilles 105a et 105b, puis traverse la pupille d'un diaphragme 106 avant d'atteindre un imageur 107.

Comme on peut le constater, la lumière est amenée à traverser plusieurs éléments du système optique 100. Or, chacun de ses éléments agit sur la lumière en fonction non seulement de sa structure, mais également de sa disposition dans le trajet lumineux. Toute déviation d'une caractéristique d'un élément dégrade irréversiblement la qualité du faisceau lumineux. Par exemple, un simple mauvais appairage entre elles des lentilles 105a et 105b peut faire chuter la performance du capteur de près de 40 %.

Il est donc nécessaire de s'assurer que chacun des éléments réponde à des exigences strictes de fabrication, et que ces éléments soient précisément disposés lors de l'assemblage du système. Ces contraintes rendent complexes et coûteuses la fabrication de tels capteurs.

La création d'un élément optique remplissant les fonctions de plusieurs de ces éléments a jusqu'à présent buté sur plusieurs obstacles qui rendaient préférable de continuer à utiliser des éléments optiques distincts. En particulier, la présence d'un diaphragme dans un tel élément optique présentait des difficultés de réalisation dissuadant l'homme du métier de l'envisager. Le document D1 (US 2004/247906 A1) traite d'un dépôt de couches alternées chrome/oxyde de chrome sur la périphérie d'une lame de verre laissant une zone dépourvue de couches au centre, afin de former un diaphragme. Le document D2 divulgue un élément optique monobloc constitué d'un matériau transparent pour une lumière, le dit élément optique comprenant une succession de lentilles de Fresnel formées dans la masse du dit matériau.

PRESENTATION DE L'INVENTION

L'invention a pour but de remédier au moins en partie à ces inconvénients et préférentiellement à tous, et vise notamment à proposer un élément optique monobloc comprenant un diaphragme d'ouverture formé dans la masse du matériau permettant de contrôler l'angle des rayons lumineux le traversant, sans altération de ceux-ci, qui soit simple et peu onéreux à fabriquer.

A cet effet, il est proposé un élément optique monobloc constitué d'un matériau transparent pour une lumière, ledit élément optique comprenant un diaphragme formé dans la masse dudit matériau transparent, le diaphragme comprenant :

- un orifice constitué dudit matériau transparent, adapté pour le passage de la lumière à travers ledit orifice,
- un écran constitué dudit matériau transparent entourant ledit orifice, ledit écran s'opposant au passage de la lumière à travers lui et étant formé par une succession de couches modifiées formées du matériau transparent, séparées les unes des autres, et présentant un indice de réfraction modifié différent de l'indice de réfraction du matériau transparent dans le reste de l'élément optique. L'élément optique est avantageusement complété par les caractéristiques suivantes, prises seules ou en quelconque de leurs combinaisons techniquement possibles :

- la succession de couches modifiées comprend au moins quatre couches modifiées, de préférence au moins dix couches modifiées ;
- les couches modifiées sont séparées par une distance comprise entre 10 nm et 200 nm ;
- les couches modifiées séparées les unes des autres constituent un miroir de Bragg ;
- l'orifice définit une pupille d'entrée d'un diamètre compris entre 0,5 mm et 2 mm ;
- les couches modifiées s'étendent à partir de l'orifice ;
- les couches modifiées s'étendent jusqu'à une surface de l'élément optique ;
- l'élément optique comprend également au moins une face réfléchissante.

L'invention concerne également un capteur d'empreintes digitales comprenant :

- une source lumineuse adaptée pour émettre une lumière,
- une surface d'acquisition configurée pour recevoir un doigt,
- un imageur configuré pour acquérir une image,

le capteur d'empreintes digitales comprend un élément optique selon l'invention, ledit élément optique étant disposé entre la surface d'acquisition et l'imageur, de sorte que la lumière en provenance de la surface d'acquisition et arrivant sur l'imageur traverse le diaphragme de l'élément optique.

L'invention concerne également un procédé de fabrication d'un élément optique selon l'invention, comprenant les étapes de :

- fourniture d'un bloc de matériau transparent pour une lumière,
- fabrication du diaphragme par balayage par un faisceau laser femtoseconde du matériau transparent aux emplacements des couches modifiées, modifiant ainsi l'indice de réfraction du matériau transparent en l'indice modifié.

PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :

- la figure 1, déjà commentée, illustre schématiquement un système optique à plusieurs éléments distincts utilisé dans un capteur d'empreintes digitales, représentatif de l'état de la technique ;
- la figure 2 illustre schématiquement une vue en coupe d'un élément optique monobloc selon un mode de réalisation possible de l'invention ;
- la figure 3 illustre schématiquement un agrandissement en coupe du diaphragme d'un élément optique monobloc selon un mode de réalisation possible de l'invention ;
- la figure 4 illustre schématiquement un instant de la fabrication du diaphragme de la figure 3.

DESCRIPTION DETAILLEE

En référence à la figure 2, un élément optique monobloc 1 est constitué d'un matériau transparent, permettant le passage de la lumière. Le matériau transparent peut être tout matériau transparent dont l'indice de réfraction est susceptible d'être modifié localement par une impulsion laser de très courte durée, typiquement comprise entre 1 femtoseconde ($10^{-15}$ s) et $5\times10^{-13}$ s, c'est-à-dire par un laser femtoseconde. Par exemple, le matériau transparent peut être du plastique, tel que du polyméthacrylate de méthyle (PMMA). Le matériau transparent peut également être du verre, un cristal, ou bien encore une céramique transparente. Il est également possible que le matériau transparent, notamment dans le cas du plastique, contiennent des additifs afin d'en modifier les propriétés optiques, et notamment sa réponse à une impulsion laser femtoseconde.

L'élément optique monobloc 1 est constitué d'un bloc du matériau transparent, présentant différentes surfaces à l'interface avec le milieu extérieur. Ces surfaces peuvent être configurées ou conformée pour remplir différentes fonctions. Ainsi, dans le cas d'un élément optique monobloc utilisé 1 dans un capteur d'empreintes digitales, il est possible de prévoir une surface d'acquisition 2 configurée pour recevoir le doigt dont on souhaite acquérir l'image. Une première surface de réflexion 3 peut par exemple être prévue pour réfléchir les rayons lumineux, notamment en provenance de la surface d'acquisition. Cette première surface de réflexion 3 peut être conformée pour que ces rayons lumineux soient renvoyés en direction d'une deuxième surface de réflexion 4, elle-même conformée pour renvoyer ces rayons en direction d'un diaphragme 5.

Il est possible que les réflexions intervenant sur les surfaces de réflexion 3, 4 soient des réflexions totales internes résultant du fait que les rayons lumineux présentent des angles d'incidence sur ces surfaces de réflexion 3, 4 supérieurs aux angles critiques définis par l'indice de réfraction du matériau transparent et la face externe de ces surfaces, typiquement de l'air ou bien un matériau déposé sur cette face externe et choisi pour que son indice de réfraction cause ces réflexions totales internes. Il est également possible que les réflexions intervenant sur les surfaces de réflexion 3, 4 résultent de la présence d'un matériau réfléchissant, tel qu'une couche métallique, déposé sur la face externe d'une surface de réflexion.

Dans l'exemple illustré, la première surface de réflexion 3 est muni d'un matériau réfléchissant sur sa face externe, tandis que les réflexions sur la deuxième surface de réflexion 4 résultent de réflexions totales internes. La première surface de réflexion 3 présente ainsi une forme par laquelle les rayons lumineux renvoyés vers la seconde surface de réflexion 4 présentent une réflexion permettant de les renvoyer vers le diaphragme 5 en prenant en compte l'aspect plan de cette seconde surface de réflexion 4. Il est aisé de déterminé la forme adéquate de cette première surface de réflexion 3 au moyen de logiciels de simulation optiques.

Il est bien entendu que l'élément optique 1 pourrait présenter une forme toute différente, avec plus ou moins de surfaces de réflexion, voire aucune, selon des modalités variées. Toutefois, pour des raisons de compacité et de disposition dans un capteur, l'élément optique 1 présente de préférence au moins une surface de réflexion configurée pour renvoyer dans l'élément optique 1 les rayons lumineux se propageant dans l'élément optique 1 sur des trajets lumineux attendus.

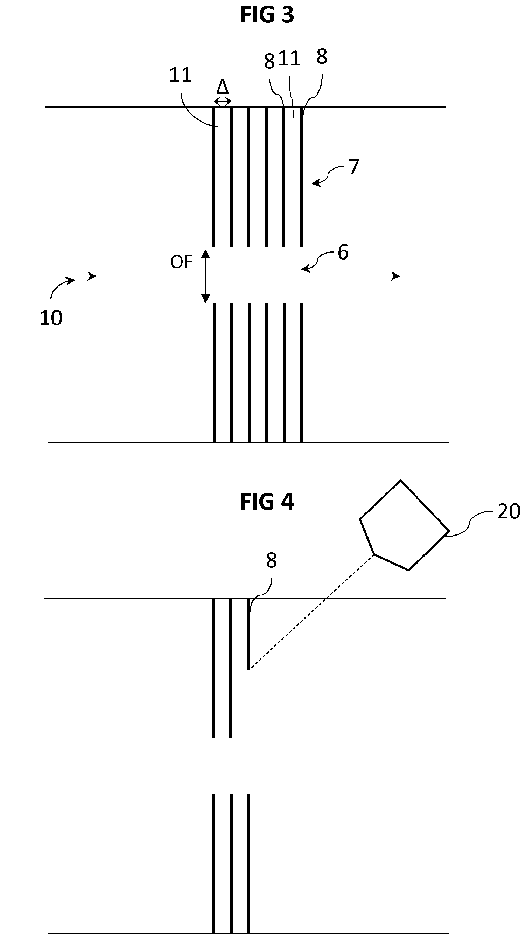

Dans tous les cas, l'élément optique 1 comprend un diaphragme 5 formé dans la masse du matériau transparent constituant l'élément optique monobloc 1. Comme visible sur la figure 3, le diaphragme 5 comprend un orifice 6 adapté pour le passage de la lumière à travers ledit orifice 6 selon une direction de propagation 10. Le diaphragme 5 comprend également un écran 7 s'opposant au passage de la lumière à travers lui dans la direction de propagation 10. L'écran 7 entoure l'orifice 6. Aussi bien l'orifice 6 que l'écran 7 sont constitué du matériau transparent constitutif de l'élément optique 1. Toutefois, l'écran 7 est formé par une succession de couches modifiées 8 du matériau transparent. Ces couches modifiées 8 présentent un indice de réfraction modifié différent de l'indice de réfraction du matériau transparent dans le reste de l'élément optique 1.

L'orifice 6 définit une pupille d'entrée et présente un diamètre OF, c'est-à-dire une plus grande dimension, transversale à la direction de la propagation 10, par exemple compris entre 0,5 mm et 2 mm, typiquement de 0,8 mm. Le diamètre OF de l'orifice 6 est choisi en fonction de considérations géométriques incluant la forme de l'élément optique 1, la distance prévue entre l'orifice 6 et l'imageur 9 réceptionnant les rayons lumineux, et/ou en prenant en compte la longueur d'onde des rayons lumineux. L'orifice 6 a de préférence une section circulaire, mais sa section peut présenter une autre forme.

Les couches modifiées 8 s'étendent à partir de l'orifice 6, et de préférence jusqu'à une surface de l'élément optique 1. Ainsi, le diaphragme 5 barre de préférence tout le chemin lumineux à travers l'élément optique 1 au niveau où est situé le diaphragme 5, empêchant la propagation des rayons lumineux dans la direction de propagation 10.

Les couches modifiées 8 alternent avec des espaces intercalaires 11 du matériau transparent non modifié ou modifié différemment, ces espaces intercalaires 11 séparant les couches modifiées 8 les unes des autres. Les couches modifiées 8 sont séparées entre elle d'une distance $\Delta$. Comme les couches modifiées 8 ont un indice de réfraction modifié $n_2$ différent de l'indice de réfraction $n_1$ du matériau transparent constituant les espaces intercalaires 11, la distance $\Delta$ est choisie de sorte à créer des interférences constructives dans la direction d'incidence des rayons lumineux, c'est-à-dire dans la direction opposée à la direction de propagation. On obtient ainsi un miroir de Bragg.

Ainsi, la distance $\Delta$ est choisie de sorte à s'approcher, de préférence avec une imprécision inférieure à 10%, de la distance optimale $\Delta_B$ :

$$\Delta_B = \frac{\lambda}{4 \times n}$$

avec À la longueur d'onde des rayons lumineux dont on veut que le diaphragme bloque le passage, et n l'indice de réfraction, en l'occurrence celui du milieu transparent constituant les espaces intercalaires 11 entre les couches modifiées 8. A titre d'exemple, avec un PMMA d'indice de réfraction $n_1$ 1,51 et pour une longueur d'onde de 650 nm, la distance optimale $\Delta_B$ est d'environ 108 nm. On peut alors par exemple prendre une distance $\Delta$ de 110 nm. De préférence, la distance $\Delta$ est comprise entre 50 nm et 200 nm, et de préférence comprise entre 70 nm et 140 nm.

Idéalement, chaque couche modifiée 8 devrait présenter une épaisseur déterminée de façon similaire proche de la distance optimale $\Delta_B$, moyennant la prise en compte de l'indice de réfraction modifié $n_2$ différent résultant de la modification. Toutefois, il peut être difficile, en fonction du procédé de fabrication des couches modifiées 8, de réaliser pour celles-ci une épaisseur suffisante ou de dimension suffisamment précise. Or, ce sont les interfaces entre les couches d'indices de réfraction différents qui donnent naissance à la diffraction de Bragg. Il n'est donc pas nécessaire pour les couches modifiées 8 de présenter une épaisseur particulière puisque leur seule présence définit les interfaces entre des indices de réfraction différents. Par conséquent, l'épaisseur des couches modifiées 8 peut être quelconque, mais est de préférence aussi fine que le permet le procédé de fabrication, afin de réduire au maximum l'étendue spatiale du diaphragme dans la direction de propagation 10.

De fait, la capacité de l'écran 7 à s'opposer au passage de la lumière à travers lui dépend essentiellement, outre des différences d'indices de réfraction entre les couches modifiées 8 et le matériau transparent des espaces intercalaires 11, du nombre de couches modifiées 8. De préférence, l'écran 7 comprend au moins 4 ou 5 couches modifiées 8 dans la direction de propagation, et de préférence au moins 10 couches modifiées 8, voire préférentiellement au moins 20 couches modifiées 8.

Il est à noter que les dimensions données ci-dessus, et notamment la distance $\Delta$, dépend de la longueur d'onde des rayons lumineux dont on cherche à bloque le passage. Dans le cas où les rayons lumineux présentent plusieurs longueurs d'onde, il est possible de prévoir plusieurs ensembles de couches modifiées 8 présentant chacun des configurations propres à une longueur d'onde particulière. Il suffit par exemple de juxtaposer ces ensembles dans la direction de propagation 10. Par exemple, lorsque le matériau transparent est un PMMA d'indice de réfraction 1,51 et si la lumière se compose de rayons lumineux de deux longueurs d'onde 650 nm et 800 nm, l'écran 7 peut se composer d'un premier ensemble de couches modifiées 8 séparées par des espaces intercalaires 11 d'une épaisseur de 108 nm, puis d'un second ensemble de couches modifiées 8 séparées par des espaces intercalaires 11 d'une épaisseur de 132 nm. Le premier ensemble renvoie les rayons ayant pour longueur d'onde 650 nm, puis le second ensemble renvoie les rayons ayant pour longueur d'onde 800 nm.

L'élément optique 1 se caractérise par sa facilité de fabrication, dont un procédé va maintenant être décrit. La première étape consiste à fournir un bloc de matériau transparent pour une lumière, comme précédemment décrit. Ainsi qu'illustré sur la figure 4, le diaphragme 5 est alors fabriqué dans la masse du bloc de matériau transparent, par balayage par un faisceau laser femtoseconde 20 du matériau transparent aux emplacements des couches modifiées 8. Le laser femtoseconde 20 émet des impulsions laser de très courtes durées, typiquement comprises entre 1 femtoseconde ($10^{-15}$ s) et $5 \times 10^{-13}$ s. Le balayage peut être obtenu en modifiant la focalisation du laser femtoseconde 20. Typiquement, le laser femtoseconde 20 balaie par son faisceau un premier plan correspondant à l'emplacement d'une première couche modifiée 8, puis balaie ensuite un deuxième plan correspondant à l'emplacement d'une deuxième couche modifiée 8, et ainsi de suite, balayant l'ensemble des emplacements des couches modifiées 8 l'une après l'autre. Ainsi qu'évoqué plus haut, il est possible de se satisfaire de l'épaisseur obtenue après un simple balayage par le laser femtoseconde 20. S'il était souhaité obtenir des couches modifiées plus épaisse, par exemple pour donner à une couche modifiée 8 une épaisseur optimale permettant une diffraction de Bragg, il suffit d'effectuer plusieurs balayage laser à des emplacements adjacents pour obtenir une couche modifiée de l'épaisseur désirée.

La longueur d'onde du laser femtoseconde 20 est choisie en fonction du matériau transparent dont on veut modifier localement l'indice de réfraction, de même que la fluence du laser ou sa durée d'impulsion, afin de modifier l'indice de réfraction du matériau transparent en l'indice modifié. Par exemple, pour un matériau transparent en PMMA, un laser femtoseconde à 200 nm peut être utilisé. Les impulsions laser de très courtes durées du laser femtoseconde 20 permettent d'affecter la matière du matériau transparent sans induire d'effets thermiques dans celui-ci. Plus l'indice modifié diffère de l'indice de réfraction du matériau transparent, plus l'écran 7 du diaphragme 5 sera efficace. Les paramètres du laser femtoseconde 20 sont donc choisis dans ce but.

L'élément optique 1 est particulièrement adapté à la réalisation d'un capteur d'empreintes digitales. Un tel capteur d'empreintes comprend alors :

- une source lumineuse adaptée pour émettre une lumière,
- une surface d'acquisition configurée pour recevoir un doigt,
- un imageur 9 configuré pour acquérir une image,
- un élément optique 1 comme précédemment décrit, ledit élément optique étant disposé entre la surface d'acquisition et l'imageur, de sorte que la lumière en provenance de la surface d'acquisition et arrivant sur l'imageur traverse le diaphragme 5 de l'élément optique 1. La surface d'acquisition 2 peut être une surface de l'élément optique 1, comme illustré sur la figure 2.

L'invention n'est pas limitée au mode de réalisation décrit et représenté aux figures annexées. Des modifications restent possibles, notamment du point de vue de la constitution des divers caractéristiques techniques ou par substitution d'équivalents techniques, sans sortir pour autant du domaine de protection de l'invention.

## Revendications

1. Élément optique (1) monobloc constitué d'un matériau transparent pour une lumière, **caractérisé en ce que** ledit élément optique comprend un diaphragme (5) formé dans la masse dudit matériau transparent, le diaphragme (5) comprenant :

   - un orifice (6) constitué dudit matériau transparent, adapté pour le passage de la lumière à travers ledit orifice (6),
   - un écran (7) constitué dudit matériau transparent entourant ledit orifice (6), ledit écran (7) s'opposant au passage de la lumière à travers lui et étant formé par une succession de couches modifiées (8) formées du matériau transparent, séparées les unes des autres, et présentant un indice de réfraction modifié différent de l'indice de réfraction du matériau transparent dans le reste de l'élément optique.

2. Élément optique (1) monobloc selon la revendication 1, dans lequel la succession de couches modifiées (8) comprend au moins quatre couches modifiées, de préférence au moins dix couches modifiées.

3. Élément optique (1) monobloc selon l'une des revendications 1 à 2, dans lequel les couches modifiées (8) sont séparées par une distance comprise entre 10 nm et 200 nm.

4. Élément optique (1) monobloc selon l'une des revendications 1 à 3, dans lequel les couches modifiées (8) séparées les unes des autres constituent un miroir de Bragg.

5. Élément optique (1) monobloc selon l'une des revendications 1 à 4, dans lequel l'orifice (6) définit une pupille d'entrée d'un diamètre compris entre 0,5 mm et 2 mm.

6. Élément optique (1) monobloc selon l'une des revendications 1 à 5, dans lequel les couches modifiées (8) s'étendent à partir de l'orifice (6).

7. Élément optique (1) monobloc selon la revendication précédente, dans lequel les couches modifiées (8) s'étendent jusqu'à une surface de l'élément optique.

8. Élément optique (1) monobloc selon l'une des revendications précédentes, comprenant également au moins une face réfléchissante (4).

9. Capteur d'empreintes digitales comprenant :

   - une source lumineuse adaptée pour émettre une lumière,
   - une surface d'acquisition (2) configurée pour recevoir un doigt,
   - un imageur (9) configuré pour acquérir une image,

   **caractérisé en ce que** le capteur d'empreintes digitales comprend un élément optique (1) selon l'une quelconque des revendications précédentes, ledit élément optique (1) étant disposé entre la surface d'acquisition et l'imageur, de sorte que la lumière en provenance de la surface d'acquisition et arrivant sur l'imageur traverse le diaphragme (5) de l'élément optique.

10. Procédé de fabrication d'un élément optique selon l'une des revendications 1 à 8, comprenant les étapes de :

   - fourniture d'un bloc de matériau transparent pour une lumière,
   - fabrication du diaphragme par balayage par un faisceau laser femtoseconde (20) du matériau transparent aux emplacements des couches modifiées (8), modifiant ainsi l'indice de réfraction du matériau transparent en l'indice modifié.

**Patentansprüche**

1. Einstückiges optisches Element (1), das aus einem für ein Licht durchlässigen Material besteht, **dadurch gekennzeichnet, dass** das optische Element eine Blende (5) umfasst, die in der Masse des durchlässigen Materials gebildet ist, wobei die Blende (5) umfasst:

   - eine aus dem durchlässigen Material bestehende Öffnung (6), die für den Durchtritt des Lichts durch die Öffnung (6) geeignet ist,
   - einen aus dem durchlässigen Material bestehenden Schirm (7), der die Öffnung (6) umgibt, wobei sich der Schirm (7) dem Durchtritt des Lichts durch denselben widersetzt und von einer Abfolge von modifizierten Schichten (8) gebildet wird, die aus dem durchlässigen Material gebildet sind, voneinander getrennt sind und einen modifizierten Brechungsindex aufweisen, der sich vom Brechungsindex des durchlässigen Materials im Rest des optischen Elements unterscheidet.

2. Einstückiges optisches Element (1) nach Anspruch 1, wobei die Abfolge von modifizierten Schichten (8) mindestens vier modifizierte Schichten, vorzugsweise mindestens zehn modifizierte Schichten umfasst.

3. Einstückiges optisches Element (1) nach einem der Ansprüche 1 bis 2, wobei die modifizierten Schichten (8) durch einen Abstand im Bereich zwischen 10 nm und 200 nm getrennt sind.

4. Einstückiges optisches Element (1) nach einem der Ansprüche 1 bis 3, wobei die voneinander getrennten modifizierten Schichten (8) einen Bragg-Spiegel darstellen.

5. Einstückiges optisches Element (1) nach einem der Ansprüche 1 bis 4, wobei die Öffnung (6) eine Eintrittspupille eines Durchmessers im Bereich zwischen 0,5 mm und 2 mm definiert.

6. Einstückiges optisches Element (1) nach einem der Ansprüche 1 bis 5, wobei sich die modifizierten Schichten (8) ab der Öffnung (6) erstrecken.

7. Einstückiges optisches Element (1) nach dem vorstehenden Anspruch, wobei sich die modifizierten Schichten (8) bis zu einer Fläche des optischen Elements erstrecken.

8. Einstückiges optisches Element (1) nach einem der vorstehenden Ansprüche, das ebenfalls mindestens eine reflektierende Seite (4) umfasst.

9. Fingerabdrucksensor, umfassend:

   - eine Lichtquelle, die dafür geeignet ist, ein Licht zu emittieren,
   - eine Erfassungsfläche (2), die dafür konfiguriert ist, einen Finger aufzunehmen,
   - einen Bildgeber (9), der dafür konfiguriert ist, ein Bild zu erfassen,

   **dadurch gekennzeichnet, dass** der Fingerabdrucksensor ein optisches Element (1) nach einem der vorstehenden Ansprüche umfasst, wobei das optische Element (1) zwischen der Erfassungsfläche und dem Bildgeber angeordnet ist, sodass das Licht, das von der Erfassungsfläche kommt und am Bildgeber eintrifft, die Blende (5) des optischen Elements durchläuft.

10. Verfahren zur Herstellung eines optischen Elements nach einem der Ansprüche 1 bis 8, das die Schritte umfasst des:

   - Bereitstellens eines Blocks aus Material, das für ein Licht durchlässig ist,
   - Herstellens der Blende durch Abtastung des durchlässigen Materials an den Stellen der modifizierten Schichten (8) mit einem Femtosekunden-Laserstrahl (20), womit der Brechungsindex des durchlässigen Materials zu dem modifizierten Index modifiziert wird.

**Claims**

1. A one-piece optical element (1) consisting of a material transparent to light, **characterized in that** said optical element comprises a diaphragm (5) formed in the mass of said transparent material, the diaphragm (5) comprising:

- an orifice (6) consisting of said transparent material, suitable for passage of light through said orifice (6),

- a screen (7) consisting of said transparent material surrounding said orifice (6), said screen (7) opposing passage of light therethrough and being formed by a succession of modified layers (8) formed of the transparent material, separated from each other, and having a modified refractive index different from the refractive index of the transparent material in the rest of the optical element.

2. The one-piece optical element (1) as claimed in claim 1, wherein the succession of modified layers (8) comprises at least four modified layers, preferably at least ten modified layers.

3. The one-piece optical element (1) as claimed in one of claims 1 to 2, wherein the modified layers (8) are separated by a distance of between 10 nm and 200 nm.

4. The one-piece optical element (1) as claimed in one of claims 1 to 3, wherein the modified layers (8) separated from each other constitute a Bragg mirror.

5. The one-piece optical element (1) as claimed in one of claims 1 to 4, wherein the orifice (6) defines an entrance pupil with a diameter of between 0.5 mm and 2 mm.

6. The one-piece optical element (1) as claimed in one of claims 1 to 5, wherein the modified layers (8) extend from the orifice (6).

7. The one-piece optical element (1) according to the preceding claim, wherein the modified layers (8) extend up to a surface of the optical element.

8. The one-piece optical element (1) according to one of the preceding claims, also comprising at least one reflective face (4).

9. A fingerprint sensor comprising:

    - a light source suitable for emitting light,
    - an acquisition surface (2) configured for receiving a finger,
    - an imager (9) configured for acquiring an image,

    **characterized in that** the fingerprint sensor comprises an optical element (1) according to any of the preceding claims, said optical element (1) being arranged between the acquisition surface and the imager, so that light originating from the acquisition surface and arriving on the imager passes through the diaphragm (5) of the optical element.

10. A method for manufacturing an optical element as claimed in one of claims 1 to 8 claim 1, comprising the steps of:

    - providing a block of material transparent to light,
    - manufacturing the diaphragm by a femtosecond laser beam (20) scanning the transparent material at the locations of the modified layers (8), thereby modifying the refractive index of the transparent material into the modified index.

**FIG 1**

**FIG 2**

## FIG 3

## FIG 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004247906 A1